# EUROPÄISCHE PATENTSCHRIFT

(11) **EP 1 217 812 B1**
(45) Veröffentlichungstag und Bekanntmachung des Hinweises auf die Patenterteilung: **14.12.2011**
(21) Anmeldenummer: 01125644.3
(22) Anmeldetag: 26.10.2001
(51) Int. Cl.: H04M 3/42

(54) **Verfahren für eine Telekommunikationsanlage zum Verarbeiten von kollidierenden Steuermeldungssequenzen**
Method for treating colliding control messages in a telecommunications apparatus
Méthode pour le traitement de messages de contrôle en collision dans un commutateur téléphonique

(30) Priorität: 21.12.2000 DE 10064109
(43) Veröffentlichungstag der Anmeldung: 26.06.2002
(73) Patentinhaber: Siemens Enterprise Communications GmbH & Co. KG, 81379 München (DE)
(72) Erfinder: Rist, Claus, 44795 Bochum (DE); Willmann, Michael, 58454 Witten (DE)
(74) Vertreter: Fritzsche, Thomas

(56) Entgegenhaltungen:
- EP-A- 0 840 490
- US-A- 4 748 656
- US-A- 5 898 772

## Beschreibung

In zeitgemäßen Kommunikationssystemen gewinnt neben einer reinen Benutzerkommunikation zunehmend auch eine computergestützte Telekommunikation an Bedeutung. Im Rahmen der computergestützten Telekommunikation werden vermittlungstechnische Vorgänge durch sogenannte CTI-Anwendungen (CTI: Computer Telephone Integration) ausgelöst oder gesteuert, die auf einem an eine Telekommunikationsanlage angeschlossenen Rechnersystem ablaufen. Zur Steuerung der vermittlungstechnischen Vorgänge übermittelt eine CTI-Anwendung Steuermeldungssequenzen, die beispielsweise eine Verbindungsaufbaumeldung und nachfolgende, Wahlziffern enthaltende Meldungen umfassen kann, an die Telekommunikationsanlage. Durch CTI-Anwendungen können für einen Benutzer neue komfortable Leistungsmerkmale bereitgestellt oder eine Bedienung vorhandener Leistungsmerkmale erleichtert werden.

In der Regel werden CTI-Anwendungen einem bestimmten Benutzer zugeordnet bzw. für einen bestimmten Benutzer ausgeführt. Dies führt zu dem Problem, dass Steuermeldungssequenzen von CTI-Anwendungen eines Benutzers mit manuellen Eingaben desselben Benutzers, die an einem herkömmlichen Endgerät getätigt werden, kollidieren können. So können beispielsweise kurz nachdem ein Benutzer eine Leistungsmerkmalaktivierung, z.B. für eine Anrufumleitung, manuell eingeleitet hat, in der Telekommunikationsanlage eine oder mehrere, Wahlziffern enthaltende Steuermeldungen eintreffen, die von einer CTI-Anwendung des Benutzers stammen. Die Wahlziffern können dabei z.B. im Rahmen eines vom zu aktivierenden Leistungsmerkmal unabhängigen, automatischen Anrufs generiert werden. In der Telekommunikationsanlage werden aus den eintreffenden Steuermeldungen die darin enthaltenen Wahlziffern extrahiert und zu einer Leisturigsmerkmalsteuerung übermittelt. Da die Leistungsmerkmalsteuerung bisheriger Telekommunikationsanlagen anhand der Wahlziffern nicht feststellen kann, welchem Leistungsmerkmal diese zugeordnet sind, können die eintreffenden Wahlziffern durch die Leistungsmerkmalsteuerung fälschlicherweise im Rahmen des vom Benutzer manuell eingeleiteten Leistungsmerkmals interpretiert werden. In der Regel führt eine derartige Fehlinterpretation zu einem Fehlerzustand, der zu einem Abbruch der Leistungsmerkmalaktivierung und zum Verwerfen der Wahlziffern führt.

Da eine solche Kollisionssituation in der Regel verhältnismäßig selten auftritt, wurde diese Problematik bei der Ausgestaltung von Telekommunikationsanlagen bisher jedoch nicht beachtet.

Beispielhaft sei hier für die Patentschrift US 4 748 656 angeführt, welche die Einbeziehung von Schnittstellen-PCs in ein Tk-System beschreibt.

Es ist Aufgabe der vorliegenden Erfindung, ein Verfahren für eine Telekommunikationsanlage zum Verarbeiten von kollidierenden, durch eine CTI-Anwendung und eine Benutzereingabe erzeugten Steuermeldungssequenzen anzugeben, durch das Kollisionssituationen auf einfache Weise bereinigt werden können.

Gelöst wird diese Aufgabe durch ein Verfahren mit den Merkmalen des Patentanspruchs 1.

Vorteilhafte Ausführungsformen und Weiterbildungen der Erfindung sind in den abhängigen Ansprüchen angegeben.

Im Rahmen des erfindungsgemäßen Verfahrens wird durch eine Telekommunikationsanlage aus einer eintreffenden Steuermeldungssequenz eine Quelleninformation abgeleitet, anhand der unterschieden werden kann, ob die eintreffende Steuermeldungssequenz von einer CTI-Anwendung oder von einem Benutzerendgerät stammt. Derartige Steuermeldungssequenzen können insbesondere eine oder mehrere Steuermeldungen und/oder Informationsmeldungen umfassen. Die Steuer- und/oder Informationsmeldungen können jeweils Steuernutzdaten, wie z.B. Verbindungsdaten, Leistungsmerkmalsteuerinformationen, Benutzerdaten und/oder Wahlziffern, zur Steuerung von Leistungsmerkmalen der Telekommunikationsanlage enthalten. Die aus der Steuermeldungsseguenz abgeleitete Quelleninformation kann z.B. eine in einem Meldungskopf enthaltene Ursprungs-Adressinformation oder ein sogenannter Meldungskode sein.

Die Quelleninformation wird zu einer Steuereinrichtung der Telekommunikationsanlage übermittelt, wo bei Vorliegen eines durch eine vorangegangene Steuermeldung aktivierten Steuerstatus, in dem mindestens eine weitere Steuermeldung erwartet wird, anhand der übermittelten Quelleninformation geprüft wird, ob die vorangegangene Steuermeldung und die eintreffende Steuermeldungssequenz unterschiedlicher Herkunft sind. Ein aktivierter Steuerstatus kann in diesem Zusammenhang beispielsweise ein offener Steuerrahmen oder ein offener Informationsrahmen sein. Die unterschiedliche Herkunft der vorangegangenen Steuermeldung und der eintreffenden Steuermeldungssequenz kann beispielsweise dadurch geprüft werden, dass die übermittelte Quelleninformation mit einer aus der vorangegangenen Steuermeldung abgeleiteten Quelleninformation, die in der Steuereinrichtung abgespeichert wurde, verglichen wird.

Falls die vorangegangene Steuermeldung und die eintreffende Steuermeldungssequenz unterschiedlicher Herkunft sind, werden aus der eintreffenden Steuermeldungssequenz extrahierte und zur Steuereinrichtung übertragene Steuernutzdaten durch die Steuereinrichtung entweder abgewiesen oder nach Beenden des aktiven Steuerstatus weiterverarbeitet.

Auf diese Weise wird eine fehlerhafte Interpretation der eintreffenden Steuermeldungssequenz im Rahmen des aktivierten Steuerstatus vermieden. Eine durch Kollision von CTI-Steuermeldungen mit Benutzereingaben verursachte Kollisionssituation wird dadurch bereinigt.

Durch die erfindungsgemäße Unterscheidung der Herkunft der Steuermeldungen bzw. Steuermeldungssequenzen, können Kollisionen insbesondere auch dann bereinigt werden, wenn durch die CTI-Anwendung und die Benutzereingabe unabhängig voneinander dasselbe Leistungsmerkmal angesteuert wird. In einem solchen Fall könnte durch eine alleinige Unterscheidung des anzusteuernden Leistungsmerkmals eine Kollisionssituation nicht bereinigt werden.

Gemäß einer bevorzugten Ausführungsform der Erfindung kann die Steuereinrichtung vor der Weiterverarbeitung der Steuernutzdaten warten, bis der aktive Steuerstatus durch ein Eintreffen mindestens einer weiteren Steuermeldung - vorzugsweise derselben Herkunft wie die vorangegangene Steuermeldung - regulär beendet wird. Auf diese Weise werden sowohl die mit dem aktiven Steuerstatus in Zusammenhang stehenden Steuervorgänge noch korrekt ausgeführt als auch die Steuernutzdaten der eintreffenden Steuermeldungssequenz korrekt weiterverarbeitet.

Alternativ dazu kann die Steuereinrichtung vor der Weiterverarbeitung der Steuernutzdaten von sich aus das Beenden des aktiven Steuerstatus veranlassen. Auf diese Weise werden zwar die im Allgemeinen mit dem beendeten Steuerstatus in Zusammenhang stehenden Steuervorgänge nicht mehr vollständig ausgeführt, doch können die Steuernutzdaten ohne weitere Verzögerung weiterverarbeitet werden. Das Abbrechen des aktiven Steuerstatus kann abhängig vom Überschreiten einer vorgegebenen Zeitgrenze erfolgen. Beim vorzeitigen Beenden des aktiven Steuerstatus kann vorzugsweise eine Abbruchmeldung zum Ursprung der vorangegangenen Steuermeldung übermittelt werden.

Analog dazu kann nach einem Abweisen der Steuernutzdaten eine Fehlermeldung zum mit Hilfe der Quelleninformation identifizierten Ursprung der Steuermeldungssequenz übermittelt werden.

Nach einer vorteilhaften Weiterbildung der Erfindung kann anhand der übermittelten Quelleninformation entschieden werden, ob die übertragenen Steuernutzdaten abgewiesen oder nach Beenden des aktiven Steuerstatus weiterverarbeitet werden. Damit kann die Entscheidung davon abhängig gemacht werden, ob die eintreffende Steuermeldungssequenz von einer CTI-Anwendung oder von einer Benutzereingabe stammt. Auf diese Weise kann entweder die CTI-Anwendung gegenüber der Benutzereingabe oder die Benutzereingabe gegenüber der CTI-Anwendung priorisiert werden.

Ein Ausführungsbeispiel der Erfindung wird nachfolgend anhand der Zeichnung näher erläutert.

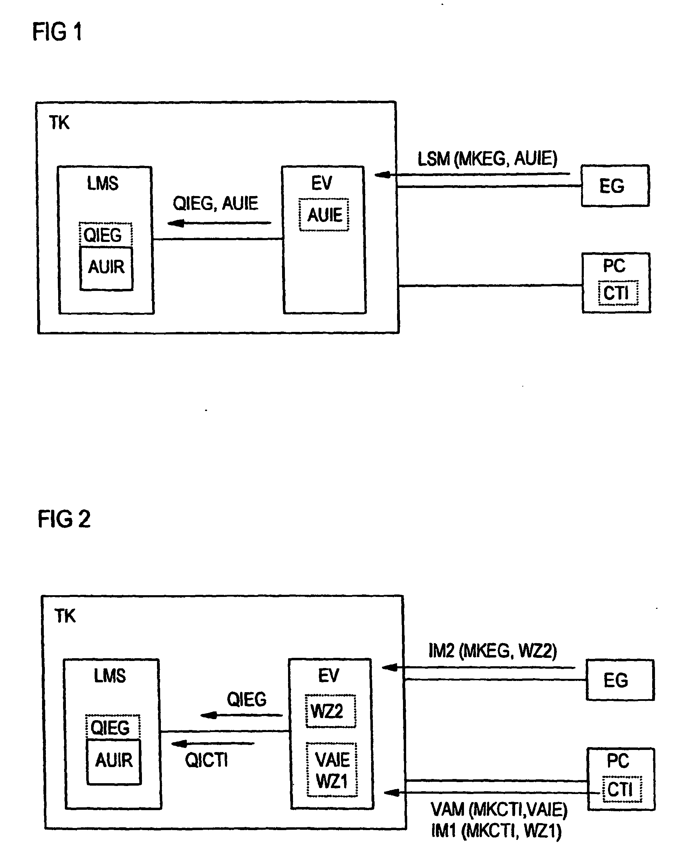

Dabei zeigen jeweils in schematischer Darstellung
Fig 1 und Fig 2 eine Telekommunikationsanlage beim Verarbeiten von Steuermeldungssequenzen, die von einem Endgerät und von einer CTI-Anwendung stammen.

In den Figuren 1 und 2 ist jeweils dieselbe Telekommunikationsanlage TK schematisch dargestellt, an die ein Endgerät EG sowie ein Personalcomputer PC, z.B. jeweils über eine sogenannte S₀-Schnittstelle, angeschlossen sind. Auf dem Personalcomputer PC läuft eine dort installierte CTI-Anwendung CTI, z.B. zur Unterstützung eines Call-Center-Betriebs ab. Die CTI-Anwendung CTI ist an die Telekommunikationsanlage TK logisch über eine sogenannte TAPI-Schnittstelle (TAPI: Telephony Application Programming Interface) oder eine sogenannte CSTA-Schnittstelle (CSTA: Computer Supported Telecommunication Application) gekoppelt. Zur Steuerung vermittlungstechnischer Vorgänge werden vom Endgerät EG und von der CTI-Anwendung CTI dazu vorgesehene Steuermeldungen, z.B. gemäß dem CoreNet-, QSIG- oder DSS1-Protokoll oder einem anderen Schicht-3-Protokoll, zur Telekommunikationsanlage TK übermittelt.

Die Telekommunikationsanlage TK weist als Steuereinrichtung eine Leistungsmerkmalsteuerung LMS sowie eine mit dieser verbundene Eingabeverarbeitungseinrichtung EV auf.

Die Leistungsmerkmalsteuerung LMS dient im Wesentlichen zum Steuern von Leistungsmerkmalen anhand von übermittelten Steuernutzdaten, wie z.B. Verbindungsdaten, Leistungsmerkmalsteuerinformationen, Benutzerdaten und/oder Wahlziffern, die als solche keine Herkunftsinformation aufweisen. Die Leistungsmerkmalsteuerung LMS ist vorzugsweise als Softwareprozedur realisiert.

Die Eingabeverarbeitungseinrichtung EV dient im Wesentlichen zum Sammeln und zur Eingangsbearbeitung empfangener Steuermeldungen. In diesem Rahmen kann die Eingabeverarbeitungseinrichtung EV auch sog. Konverterfunktionen, wie z.B. zum Weiterleiten von B-kanallosen SETUP-Meldungen oder zum Umwerten von CTI-Meldungen, bereitstellen. Die Eingabeverarbeitungseinrichtung EV verfügt weiterhin über eine Vielzahl benutzerspezifischer Eingabeports (nicht dargestellt), die jeweils einem individuellen Benutzer zugeordnet sind. Da das Endgerät EG sowie die CTI-Applikation CTI demselben Benutzer zugeordnet sind, treffen ihre Steuermeldungen auf demselben Eingangsport ein.

Im vorliegenden Ausführungsbeispiel sind das Endgerät EG sowie die CTI-Anwendung CTI demselben Benutzer zugeordnet, bzw. werden vom selben Benutzer bedient. Die bei der Telekommunikationsanlage TK vom Endgerät EG und der CTI-Anwendung CTI eintreffenden Steuermeldungen werden daher als vom selben Benutzer stammend erkannt und interpretiert.

**Fig 1** zeigt die Telekommunikationsanlage TK beim Verarbeiten einer vom Endgerät EG übermittelten Leistungsmerkmalsteuermeldung LSM. Es sei beispielhaft angenommen, dass die Leistungsmerkmalsteuermeldung LSM zum Initiieren einer Anrufumleitung dient. Die Leistungsmerkmalsteuermeldung LSM enthält im Meldungskopf einen herkunftsspezifischen Meldungskode MKEG. Anhand des Meldungskodes MKEG ist erkennbar, dass die Leistungsmerkmalsteuermeldung LSM von einem Endgerät, hier EG, und nicht von einer CTI-Anwendung stammt. Die Leistungsmerkmalsteuermeldung LSM enthält weiterhin als Steuernutzdaten Informationselemente AUIE, die die einzurichtende Anrufumleitung spezifizieren.

Die Leistungsmerkmalsteuermeldung LSM wird zur Eingabeverarbeitungseinrichtung EV übermittelt und dort bearbeitet. Hierbei wird aus dem Meldungskode MKEG eine Quelleninformation QIEG abgeleitet, die das Endgerät EG als Quelle der Leistungsmerkmalsteuermeldung LSM identifiziert. Ferner werden aus der Leistungsmerkmalsteuermeldung LSM die Steuernutzdaten AUIE extrahiert und in der Eingabeverarbeitungseinrichtung EV - wie in Fig 1 durch ein punktiertes Rechteck angedeutet - zwischengespeichert. Die abgeleitete Quelleninformation QIEG wird weiterhin zur Leistungsmerkmalsteuerung LMS übermittelt.

Durch das Übermitteln der Quelleninformation QIEG wird die Leistungsmerkmalsteuerung LMS dazu veranlaßt, zu überprüfen, ob ein offener, leistungsmerkmalspezifischer Steuer- oder Informationsrahmen vorliegt, der dem durch die Quelleninformation QIEG identifizierten Endgerät EG zugeordnet ist. Unter einem offenen Steuer- bzw. Informationsrahmen ist in diesem Zusammenhang ein durch eine vorangegangene Steuermeldung aktivierter, leistungsmerkmalspezifischer Steuerstatus zu verstehen, in dem noch mindestens eine weitere Steuermeldung erwartet wird. Für das vorliegende Ausführungsbeispiel sei angenommen, dass zum Zeitpunkt der Übermittlung der Leistungsmerkmalsteuermeldung LSM kein offener Steuer- bzw. Informationsrahmen aktiviert ist. Infolgedessen werden die zwischengespeicherten Informationselemente AUIE abgerufen und zur Leistungsmerkmalsteuerung LMS übertragen, wo anhand der Steuernutzdaten AUIE ein neuer Informationsrahmen AUIR zum Initiieren der Anrufumleitung geöffnet wird. Dem geöffneten Informationsrahmen AUIR wird dabei die Quelleninformation QIEG - wie in Fig 1 durch ein punktiertes Rechteck angedeutet - zugeordnet. Der geöffnete Informationsrahmen repräsentiert einen Steuerstatus, in dem noch weitere Steuerinformationen, die zur Aktivierung der Anrufumleitung erforderlich sind, erwartet werden. Im vorliegenden Ausführungsbeispiel wird von dem geöffneten Informationsrahmen AUIR noch eine Rufnummer desjenigen Endgerätes erwartet, zu dem die einzurichtende Anrufumleitung hinführen soll.

**Fig 2** zeigt die Telekommunikationsanlage TK in einer zeitlich anschließenden Steuerungsphase. Hierbei wird zunächst von der CTI-Anwendung CTI eine Steuermeldungssequenz, die eine Verbindungsaufbaumeldung VAM sowie eine Informationsmeldung IM1 umfaßt, zum Aufbau einer Verbindung zur Telekommunikationsanlage TK übermittelt. Der Aufbau der Verbindung ist dabei unabhängig von der vom Endgerät EG aus eingeleiteten Anrufumleitung. Bei der Übermittlung dieser Steuermeldungssequenz ist der Informationsrahmen AUIR für die einzurichtende Anrufumleitung noch geöffnet.

Die Verbindungsaufbaumeldung VAM, z.B. eine sogenannte SETUP-Meldung gemäß dem Schicht-3-Protokoll DSS1, enthält als Steuernutzinhalt ein Verbindungsaufbau-Informationselement VAIE sowie im Meldungskopf einen Meldungskode MKCTI der CTI-Anwendung CTI. Das Verbindungsaufbau-Informationselement VAIE kann beispielsweise Verbindungs- und/oder Übermittlungseigenschaften der aufzubauenden Verbindung angeben.

Die Informationsmeldung IM1, z.B. eine sogenannte INFO-Meldung gemäß dem DSS1-Protokoll, enthält als Steuernutzinformation Wahlziffern WZ1, die eine Rufnummer des Verbindungsziels repräsentieren, sowie im Meldungskopf den Meldungskode MKCTI der CTI-Anwendung CTI. Anstelle der Wahlziffern WZ1 könnten in derartigen Informationsmeldungen auch andere Informationselemente, wie z.B. Anzeigeinformationen, Leistungsmerkmalinformationen, eine B-Kanal-Auswahlinformation, Gebühreninformationen und/oder Tastenkodes enthalten sein.

Die Verbindungsaufbaumeldung VAM und die Informationsmeldung IM1 werden zur Eingabeverarbeitungseinrichtung EV übermittelt. Da die CTI-Anwendung CTI und das Endgerät EG demselben Benutzer zugeordnet sind, treffen die Verbindungsaufbaumeldung VAM und die Informationsmeldung IM1 am gleichen benutzerspezifischen Eingabeport der Eingabeverarbeitungseinrichtung EV ein wie die Leistungsmerkmalsteuermeldung LSM. Aus der Steuermeldungssequenz werden durch die Eingabeverarbeitungseinrichtung EV der Meldungskode MKCTI sowie die Informationselemente VAIE und WZ1 extrahiert. Aus dem Meldungskode MKCTI wird daraufhin eine Quelleninformation QICTI abgeleitet, die die CTI-Anwendung CTI als Quelle der Steuermeldungssequenz identifiziert. Während die Quelleninformation QICTI zur Leistungsmerkmalsteuerung LMS übertragen wird, werden die extrahierten Informationselemente VAIE und WZ1 in der Eingabeverarbeitungseinrichtung EV - wie in Fig 2 durch ein punktiertes Rechteck angedeutet - zwischengespeichert.

Nach Eintreffen der Quelleninformation QICTI prüft die Leistungsmerkmalsteuerung LMS, ob ein durch eine vorangegangene Steuermeldung geöffneter Steuer- oder Informationsrahmen momentan aktiv ist. Im vorliegenden Ausführungsbeispiel wird der geöffnete Informationsrahmen AUIR als aktiviert erkannt. Infolgedessen wird durch die Leistungsmerkmalsteuerung LMS die dem geöffneten Informationsrahmen AUIR zugeordnete Quelleninformation, hier QIEG, mit der eintreffenden Quelleninformation, hier QICTI, verglichen. Durch den Vergleich soll festgestellt werden, ob die neu eintreffende Steuermeldungssequenz aus derselben Quelle stammt wie die vorangegangene Steuermeldung LSM, die den Informationsrahmen AUIR geöffnet hat. Im vorliegenden Ausführungsbeispiel wird durch die Leistungsmerkmalsteuerung LMS erkannt, dass die neu eintreffende Steuermeldungssequenz nicht aus der Quelle stammt, die das Öffnen des Informationsrahmens AUIR veranlaßt hat. Die Leistungsmerkmalsteuerung LMS kann somit erkennen, dass die der Quelleninformation QICTI zugeordneten Informationselemente VAIE und WZ1 nicht innerhalb des Informationsrahmens AUIR zu verarbeiten sind. Erfindungsgemäß werden deshalb die zwischengespeicherten Informationselemente VAIE und WZ1 durch die Leistungsmerkmalsteuerung LMS entweder abgewiesen oder erst nach Schließen des Steuerrahmens AUIR weiterverarbeitet. Die durch die Kollision der CTI-Steuermeldungssequenz mit den Benutzereingaben verursachte Kollisionssituation wird dadurch bereinigt.

Die Entscheidung darüber, ob die neu eingetroffenen Informationselemente, hier VAIE und WZ1, abgewiesen oder weiterverarbeitet werden, kann beispielsweise durch Voreinstellung vorgegeben werden oder abhängig von der übermittelten Quelleninformation, hier QICTI, den Informationselementen und/oder dem aktivierten Steuerstatus erfolgen. So kann beispielsweise vorgegeben werden, dass bei kollidierenden Steuermeldungssequenzen einer CTI-Anwendung und eines Benutzers stets die Benutzereingabe oder alternativ dazu stets die Steuermeldungssequenz der CTI-Anwendung priorisiert wird und damit weiterverarbeitet wird. Die jeweils andere, nicht priorisierte Steuermeldungssequenz wird entsprechend abgewiesen. Beim Abweisen einer neu eintreffenden Steuermeldungssequenz wird vorzugsweise eine Fehlermeldung zum mit Hilfe der Quelleninformation identifizierten Ursprung des Steuermeldungssequenz übermittelt.

Für die folgenden Ausführungen sei angenommen, dass die Steuermeldungssequenz der CTI-Anwendung CTI nicht abzuweisen, sondern weiterzuverarbeiten ist. Dies kann auf unterschiedliche Weise realisiert werden:

Nach einer ersten Ausführungsform des Verfahrens kann die Leistungsmerkmalsteuerung LMS mit der Weiterverarbeitung der Informationselemente VAIE und WZ1 so lange warten, bis der Informationsrahmen AUIR durch Eintreffen der erwarteten Steuermeldung regulär beendet wird. Im vorliegenden Ausführungsbeispiel besteht die erwartete Steuermeldung aus einer Informationsmeldung IM2, die vom Benutzer einzugebende Wahlziffern WZ2 enthält. Die Wahlziffern WZ2 werden im vorliegenden Ausführungsbeispiel vom Benutzer erst eingegeben, nachdem die Steuermeldungssequenz der CTI-Anwendung CTI zur Telekommunikationsanlage TK übermittelt wurde.

Nach Eingabe der Wahiziffern WZ2 am Endgerät EG wird die Informationsmeldung IM2 zur Eingabeverarbeitungseinrichtung EV übermittelt, wo die Wahlziffern WZ2 aus der Informationsmeldung IM2 extrahiert und zwischengespeichert werden. Weiterhin wird aus dem Meldungskopf der Informationsmeldung IM2 ein darin enthaltener herkunftsspezifischer Meldungskode, hier der Meldungskode MKEG des Endgerätes EG, extrahiert. Aus dem extrahierten Meldungskode MKEG wird eine das Endgerät EG i-dentifizierende Quelleninformation QIEG abgeleitet und zur Leistungsmerkmalsteuerung LMS übermittelt. Die übermittelte Quelleninformation QIEG wird daraufhin von der Leistungsmerkmalsteuerung LMS mit geöffneten Steuer- oder Informationsrahmen zugeordneten Quelleninformationen verglichen. Auf diese Weise wird im vorliegenden Ausführungsbeispiel der Informationsrahmen AUIR als für die Wahlziffern WZ2 zuständig ermittelt, da er durch die Quelleninformation QIEG dem Endgerät EG zugeordnet ist, von dem auch die eingegebenen Wahlziffern WZ2 stammen. Infolgedessen werden durch die Leistungsmerkmalsteuerung LMS die Wahlziffern WZ2 aus der Eingabeverarbeitungseinrichtung EV abgerufen und innerhalb des dafür zuständigen Informationsrahmens AUIR verarbeitet. Dabei wird die durch die Wahlziffern WZ2 spezifizierte Anrufumleitung eingerichtet und aktiviert. Der Informationsrahmen AUIR wird anschließend geschlossen, da im Rahmen der Aktivierung der Anrufumleitung keine weiteren Steuermeldungen mehr erwartet werden.

Durch das Schließen des Informationsrahmens AUIR wird die Weiterverarbeitung der von der CTI-Anwendung CTI stammenden Informationselemente VAIE und WZ1 veranlaßt. Die genannten Informationselemente VAIE und WZ1 werden zu diesem Zweck aus der Eingabeverarbeitungseinrichtung EV abgerufen und zur Leistungsmerkmalsteuerung LMS übermittelt. Durch die Leistungsmerkmalsteuerung LMS wird infolgedessen gemäß dem übermittelten Verbindungsaufbau-Informationselement VAIE eine Verbindung zu dem durch die Wahlziffern WZ1 spezifizierten Verbindungsziel aufgebaut. Bei dieser ersten Ausführungsform des Verfahrens werden die kollidierenden Steuermeldungen LSM, IM2, VAM und IM1 des Endgerätes EG und der CTI-Anwendung CTI nacheinander konfliktfrei verarbeitet.

Gemäß einer zweiten Ausführungsform des Verfahrens kann der geöffnete Informationsrahmen AUIR vor Eintreffen der in diesem Steuerstatus erwarteten Steuermeldung IM2 durch die Leistungsmerkmalsteuerung LMS geschlossen werden. Nach Schließen des Informationsrahmens AUIR können die in der Eingabeverarbeitungseinrichtung EV zwischengespeicherten Informationselemente VAIE durch die Leistungsmerkmalsteuerung LMS abgerufen und unmittelbar weiterverarbeitet werden. Die vom Benutzer initiierte Anrufumleitung wird dadurch abgebrochen und statt dessen eine Verbindung gemäß dem Verbindungsaufbau-Informationselement VAIE aufgebaut. Die später eintreffende Informationsmeldung IM2 wird entsprechend abgewiesen, da in der Leistungsmerkmalsteuerung LMS kein Informationsrahmen mehr aktiv ist, der vom Endgerät EG stammenden Steuermeldungen oder Steuermeldungssequenzen zugeordnet wäre. Vorzugsweise kann mit dem Beenden des Steuerrahmens AUIR eine Abbruchmeldung zum durch die Quelleninformation QIEG identifizierten Endgerät EG übermittelt werden.

Da die aus den Steuermeldungen extrahierten und in der Leistungsmerkmalsteuerung LMS zu verarbeitenden Steuernutzdaten bzw. Informationselemente selbst keine Herkunftsinformation mehr enthalten, wird die Herkunft der Informationselemente getrennt von deren Bearbeitung ermittelt. So wird im vorliegenden Ausführungsbeispiel die Herkunft der extrahierten Informationselemente AUIE, WZ2, VAIE und WZ1 in der Eingabeverarbeitungseinrichtung EV anhand des Meldungskopfs der jeweiligen Steuermeldung LSM, IM2, VAM bzw. IM1 ermittelt und die ermittelte Herkunftsinformation in Form der Quelleninformation QIEG bzw. QICTI zur Leistungsmerkmalsteuerung LMS übermittelt, wo die Informationselemente AUIE, WZ2, VAIE und WZ1 zu verarbeiten sind.

## Patentansprüche

1. Verfahren für eine Telekommunikationsanlage (TK) zum Verarbeiten von kollidierenden, durch eine CTI-Anwendung (CTI) und eine Benutzereingabe an einem Benutzerendgerät (EG) erzeugten Steuermeldungssequenzen, wobei das Benutzerendgerät (EG) und die CTI-Anwendung demselben Benutzer zugeordnet sind, bei dem
a) durch die Telekommunikationsanlage (TK) aus einer eintreffenden Steuermeldungssequenz (VAM, IM1) eine Quelleninformation (QICTI) abgeleitet wird, anhand der unterscheidbar ist, ob die eintreffende Steuermeldungssequenz (VAM, IM1) von der CTI-Anwendung (CTI) oder vom Benutzerendgerät (EG) stammt,
b) die Quelleninformation (QICTI) zu einer Steuereinrichtung (LMS) der Telekommunikationsanlage (TK) übermittelt wird,
c) durch die Steuereinrichtung (LMS) bei Vorliegen eines durch eine vorangegangene Steuermeldung (LSM) aktivierten Steuerstatus, in dem mindestens eine weitere Steuermeldung (IM2) erwartet wird, anhand der übermittelten Quelleninformation (QICTI) geprüft wird, ob die vorangegangene Steuermeldung (LSM) und die eintreffende Steuermeldungssequenz (VAM, IM1) unterschiedlicher Herkunft sind, und
d) bei unterschiedlicher Herkunft aus der eintreffenden Steuermeldungssequenz (VAM, IM1) extrahierte und zur Steuereinrichtung (LMS) übertragene Steuernutzdaten (VAIE, WZ1) durch die Steuereinrichtung (LMS) entweder abgewiesen oder nach Beenden des aktiven Steuerstatus weiterverarbeitet werden.

2. Verfahren nach Anspruch 1,
**dadurch gekennzeichnet,**
**dass** die Steuereinrichtung (LMS) vor der Weiterverarbeitung der Steuernutzdaten (VAIE, WZ1) wartet, bis der aktive Steuerstatus durch ein Eintreffen mindestens einer weiteren Steuermeldung (IM2) regulär beendet wird.

3. Verfahren nach Anspruch 1,
**dadurch gekennzeichnet,**
**dass** die Steuereinrichtung (LMS) vor der Weiterverarbeitung der Steuernutzdaten (VAIE, WZ1) von sich aus das Beenden des aktiven Steuerstatus veranlaßt.

4. Verfahren nach Anspruch 3,
**dadurch gekennzeichnet,**
**dass** nach dem Beenden des aktiven Steuerstatus eine Abbruchmeldung zum Ursprung (EG) der vorangegangenen Steuermeldung (LSM) übermittelt wird.

5. Verfahren nach Anspruch 1,
**dadurch gekennzeichnet,**
**dass** nach Abweisen der Steuernutzdaten (VAIE, WZ1) eine Fehlermeldung zum mit Hilfe der Quelleninformation (QIEG, QICTI) identifizierten Ursprung (PC) der Steuermeldungssequenz (VAM, IM1) übermittelt wird.

6. Verfahren nach einem der vorhergehenden Ansprüche,
**dadurch gekennzeichnet,**
**dass** anhand der übermittelten Quelleninformation (QIEG, QICTI) entschieden wird, ob die übertragenden Steuernutzdaten (VAIE, WZ1) abgewiesen oder weiterverarbeitet werden.

## Claims

1. Method for a telecommunications system (TC) for processing colliding control message sequences generated by a CTI application (CTI) and a user input at a user terminal (UT), wherein the user terminal (UT) and the CTI application are assigned to the same user, in which(,)
a) through the telecommunications system (TC), a source information (QICTI) is derived from an incoming control message sequence (VAM, IM1) which allows the distinction of whether the incoming control message sequence (VAM, IM1) originates from the CTI application (CTI) or from the user terminal (UT),
b) the source information (QICTI) is transmitted to a controller (LMS) of the telecommunications system (TC),
c) a check is performed, through the controller (LMS), if a control status activated by a preceding control message (LSM) exists in which at least one further control message (IM2) is anticipated, using the transmitted source information (QICTI), as to whether the preceding control message (LSM) and the incoming control message sequence (VAM, IM1) are from separate origins, and
d) in case of different origins, useful control data (VAIE, WZ1) extracted from the incoming control message sequence (VAM, IM1) and transmitted to the controller (LMS) is either rejected by the controller (LMS) or processed further at the end of the active control status.

2. Method according to claim 1, **characterised in that** the controller (LMS) waits before the further processing of the useful control data (VAIE, WZ1) until the active control status is properly ended by the arrival of at least one further control message (IM2).

3. Method according to claim 1, **characterised in that** the controller (LMS) initiates, of its own accord, the ending of the active control status before the further processing of the useful control data (VAIE, WZ1).

4. Method according to claim 3, **characterised in that**, after ending the active control status, a cancellation message is transmitted to the origin (UT) of the preceding control message (LSM).

5. Method according to claim 1, **characterised in that**, after the rejection of the useful control data (VAIE, WZ1), an error message is transmitted to the origin (PC) of the control message sequence (VAM, IM1) identified using the source information (QIEG, QICTI).

6. Method according to one of the preceding claims, **characterised in that** the transmitted source information (QIEG, QICTI) is used in order to decide whether the transmitted useful control data (VAIE, WZ1) is rejected or processed further.

## Revendications

1. Procédé pour une installation de télécommunication (TK), destiné à traiter des séquences de messages de commande en collision, générées par une application CTI (CTI) et par une entrée d'un utilisateur sur un appareil utilisateur (EG), l'appareil utilisateur (EG) et l'application CTI étant affectés au même utilisateur, dans lequel
a) l'installation de télécommunication (TK) déduit à partir d'une séquence de messages de commande arrivante (VAM, IM1) une information de source (QICTI) à l'aide de laquelle il est possible de différencier si la séquence de messages de commande arrivante (VAM, IM1) provient de l'application CTI (CTI) ou de l'appareil utilisateur (EG),
b) l'information de source (QICTI) est communiquée à un dispositif de commande (LMS) de l'installation de télécommunication (TK),
c) en présence d'un état de commande qui a été activé par un message de commande précédent (LSM) et au cours duquel au moins un autre message de commande (IM2) est attendu, le dispositif de commande (LMS) vérifie à l'aide de l'information de source communiquée (QICTI) si le message de commande précédent (LSM) et la séquence de messages de commande arrivante (VAM, IM1) sont de provenance différente, et
d) en cas de provenance différente, des données utiles de commande (VAIE, WZ1) extraites de la séquence de messages de commande arrivante (VAM, TM1) et transmises au dispositif de commande (LMS) sont soit rejetées par le dispositif de commande (LMS), soit continuent d'être traitées par le dispositif de commande (LMS) après la fin de l'état de commande actif.

2. Procédé selon la revendication 1,
**caractérisé en ce que**
le dispositif de commande (LMS) attend avant la poursuite du traitement des données utiles de commande (VAIE, WZ1) jusqu'à ce qu'une arrivée d'au moins un autre message de commande (IM2) mette fin régulièrement à l'état de commande actif.

3. Procédé selon la revendication 1,
**caractérisé en ce que**
le dispositif de commande (LMS) avant la poursuite du traitement des données utiles de commande (VAIE, WZ1) impose de lui-même la fin de l'état de commande actif.

4. Procédé selon la revendication 3,
**caractérisé en ce que**,
après la fin de l'état de commande actif, un message d'annulation est communiqué au dispositif à l'origine (EG) du message de commande précédent (LSM).

5. Procédé selon la revendication 1,
**caractérisé en ce que**,
après le rejet des données utiles de commande (VAIE, WZ1), un message d'erreur est communiqué au dispositif à l'origine (PC) de la séquence de messages de commande (VAM, IM1) identifiée à l'aide de l'information de source (QIEG, QICTI).

6. Procédé selon l'une quelconque des revendications précédentes,
**caractérisé en ce que**,
à l'aide de l'information de source communiquée (QIEG, QICTI), il est décidé si les données utiles de commande transmises (VAIE, WZ1) sont rejetées ou continuent d'être traitées.
